# EUROPEAN PATENT APPLICATION

(11) **EP 4 800 260 A1**
(43) Date of publication of application: **02.09.2026**
(21) Application number: 23956795.1
(22) Date of filing: 25.10.2023
(51) Int. Cl.: F16D 65/18, F16D 121/22, F16D 55/00

(54) **NON-EXCITATION OPERATION BRAKE**

(71) Applicant: Harmonic Drive Systems Inc., Shinagawa-ku Tokyo 140-0013 (JP)
(72) Inventor: TAKEDA, Toru, Azumino-shi, Nagano 399-8305 (JP); KOBAYASHI, Tsutomu, Azumino-shi, Nagano 399-8305 (JP)
(74) Representative: TBK
(86) International application number: PCT/JP2023/038596
(87) International publication number: WO 2025/088743

(57) **Abstract**

In a non-excitation actuated brake (1), the magnetic force of a permanent magnet (17) is used to hold an attraction plate (13) at a brake force release position (13A) that is located away from a friction brake plate (12). The coil energization of an electromagnet (16) may be performed only when moving the attraction plate (13) held at a brake force application position (13B) toward the brake force release position (13A) and when moving the attraction plate (13) held at the brake force release position (13A) toward the brake force application position (13B). Heat generation and power consumption due to continuous coil energization can be suppressed. By setting the electromagnetic force by the electromagnet (16) to an appropriate value, it is possible to reliably and quickly switch between the brake force application state and the brake force release state.

## Description

### TECHNICAL FIELD

The present invention relates to a non-excitation actuated brake, and more specifically relates to a non-excitation actuated brake with a built-in permanent magnet, in which a brake-force-released state is maintained by the magnetic force of a permanent magnet.

### BACKGROUND ART

Non-excitation actuated brakes are installed in servo motors and the like as a safety mechanism during non-operational periods. As described in, for example, Patent Document 1, a non-excitation actuated brake is provided with a friction brake plate, an attraction plate made of magnetic material, and an electromagnet, which are arranged on an outer peripheral portion of a rotating shaft of a motor, along an axial direction thereof. The attraction plate, which is capable of moving along the rotating shaft, is pressed by spring force against the friction brake plate, which is mounted so as to rotate integrally with the rotating shaft, whereby brake force is applied to the rotating shaft. When an electromagnet facing the attraction plate is excited, the attraction plate moves away from the friction brake plate against the spring force due to magnetic attraction, and the brake force is released. Generally, for a non-excitation actuated brake to reliably generate brake force, a fixed plate is disposed at a fixed position along the axial direction of the rotating shaft. The attraction plate, which is capable of moving in the axial direction, is urged against the fixed plate by spring force of a compression spring, interposed by the friction brake plate, which is mounted on the rotating shaft so as to be capable of moving in the axial direction. When the electromagnet is excited, the attraction plate is attracted, allowing the friction brake plate to rotate freely, and the brake force applied to the rotating shaft is released.

### Prior Art Documents

### Patent Documents

Patent Document 1: JP 2013-2617 A
Patent Document 2: WO 2015/198399 A1
Patent Document 3: WO 2006/103727 A1

### DISCLOSURE OF THE INVENTION

### PROBLEMS TO BE SOLVED BY THE INVENTION

In a prior-art non-excitation actuated brake, it is common to supply, e.g., 24V DC or 90V DC power to an electromagnet in order to release the brake force during the operation of an actuator, a motor, etc. An attraction operation, which moves the attraction plate to a brake force release position, involves applying voltage to a coil of the electromagnet, and the resulting electromagnetic force attracts and pulls the attraction plate, which is made of magnetic material. To maintain the brake force release state, current continuously flows through the coil of the electromagnet. In other words, while the non-excitation actuated brake plays a role in stopping the actuator or the rotating shaft of the motor during emergency stops in the event of a power stoppage or the like, continuous voltage application is required at all other times.

The heat generated from leads due to the current flowing through the coil of the electromagnet causes the overall temperature of the brake to rise. This increase in brake temperature raises the temperature of the actuator or motor in which the brake is incorporated, affecting a winding temperature and an internal temperature of an encoder.

In view of the foregoing, it is an object of the present invention to provide a non-excitation brake with which the brake force release state can be maintained without continuously supplying current to the coil of the electromagnet, in order to minimize heat generation and power consumption caused by energizing the coil.

### MEANS OF SOLVING THE PROBLEMS

The non-excitation actuated brake of the present invention is characterized by comprising:
a friction brake plate that is attached to a rotating shaft, to which a brake force is to be applied, and that rotates integrally with the rotating shaft;
an attraction plate that is made of a magnetic material and that can be moved to a brake force application position of being pressed against the friction brake plate and a brake force release position of being separated from the friction brake plate;
a compression spring that generates a holding spring force for holding the attraction plate at the brake force application position;
a permanent magnet that generates a holding magnetic force for holding the attraction plate at the brake force release position;
an electromagnet capable of generating an electromagnetic force for moving the attraction plate; and
a brake control circuit that drivably controls the electromagnet so that when a power source is shut off, the attraction plate, which has been held at the brake force release position, moves toward the brake force application position, and when the power source is turned on, the attraction plate, which has been held at the brake force application position, moves toward the brake force release position.

The brake control circuit is provided with:
a power source monitoring unit that monitors the power source;
a charging unit that stores power for exciting the electromagnet;
a coil voltage control unit that, when the power source monitoring unit detects that the power source is shut off, uses the power supplied from the charging unit to momentarily energize a coil of the electromagnet in a direction that cancels out the holding magnetic force of the permanent magnet, in order to move the attraction plate from the brake force release position to the brake force application position; and
an attraction/release detection unit that detects an operation of attracting the attraction plate and an operation of releasing the attraction plate.

In such instances, when the power source monitoring unit detects that the power source is turned on, the coil voltage control unit performs an operation of charging the charging unit and, in order to move the attraction plate from the brake force application position to the brake force release position, momentarily energizes the coil of the electromagnet to generate electromagnetic force for attracting the attraction plate.

In addition, the attraction plate can be held by attraction at the brake force release position by the magnetic attraction force of the permanent magnet, and the coil of the electromagnet can be continuously energized at a low voltage to increase the holding force.

### EFFECT OF THE INVENTION

In the present invention, the magnetic attraction force of the permanent magnet is used to hold the attraction plate at the brake force release position, where the attraction plate is separated from the friction brake plate. The coil of the electromagnet should be energized only when the attraction plate held at the brake force application position is moved to the brake force release position, and when the attraction plate held at the brake force release position is moved to the brake force application position. Thus, heat generation and power consumption caused by continuous energizing of the coil can be minimized. In addition, it is possible to switch reliably and rapidly between brake force application and brake force releasing by setting the holding spring force, the holding magnetic force, and the electromagnetic force of the electromagnet to appropriate values.

### BRIEF DESCRIPTION OF THE DRAWINGS

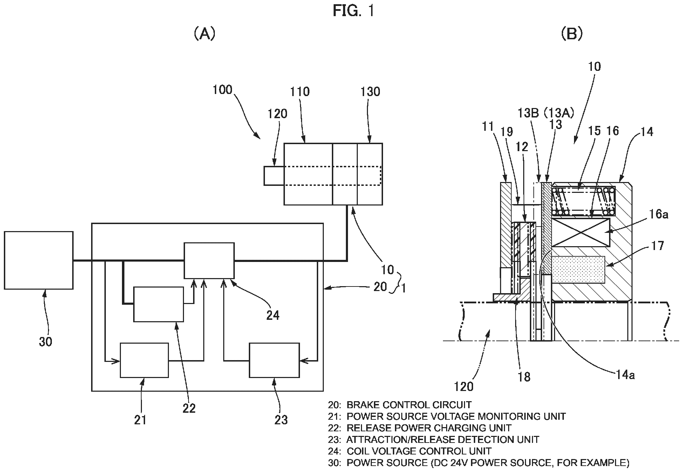

FIG. 1(A) is a schematic block diagram of a non-excitation actuated brake of the present invention, which is incorporated into a motor system, and FIG. 1(B) is a schematic half-sectional view of a brake mechanism part of the non-excitation actuated brake;

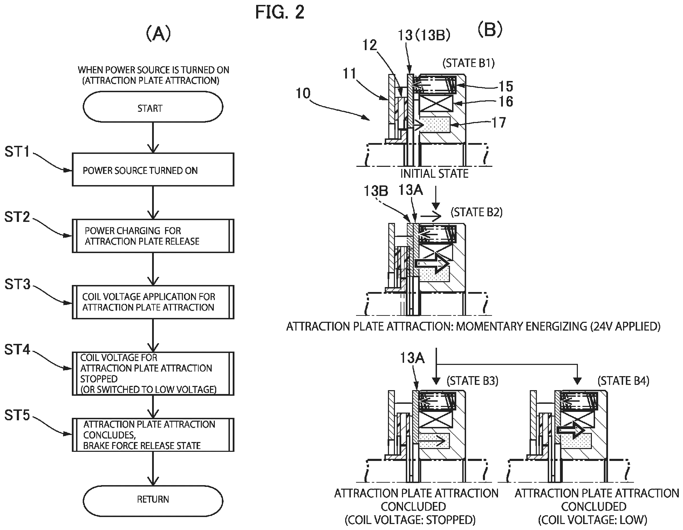

FIG. 2(A) is a schematic flowchart of the operation of the non-excitation actuated brake when a power source is on (attraction plate attraction operation), and FIG. 2(B) is an explanatory diagram of the state of the brake mechanism part of the non-excitation actuated brake during a transition from an initial state to the brake force release state (completion of attraction plate attraction); and

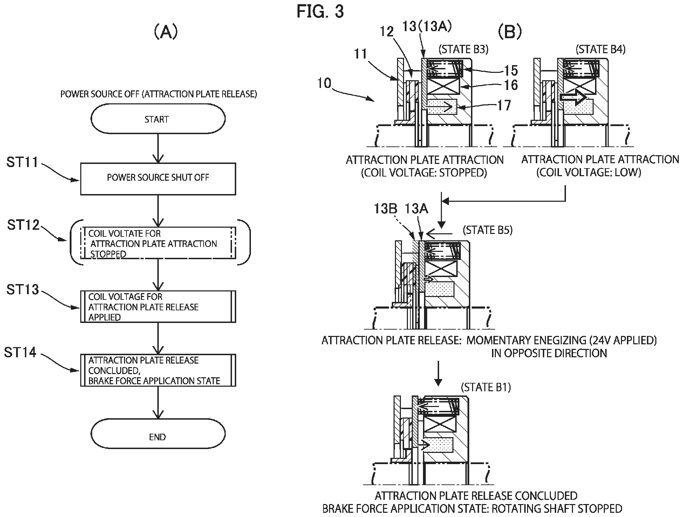

FIG. 3(A) is a schematic flowchart of the operation of the non-excitation actuated brake when the power source is shut off (attraction plate release operation), and FIG. 3(B) is an explanatory diagram of the state of the brake mechanism part of the non-excitation actuated brake during a transition from the brake force release state (attraction plate attracted state) to the brake force applied state (attraction plate released state).

### MODE FOR CARRYING OUT THE INVENTION

An embodiment of a non-excitation actuated brake to which the present invention is applied shall be described below with reference to the accompanying drawings. In the example described below, the non-excitation actuated brake of the present invention is applied to a motor system. The present invention is not limited to the configuration of the embodiment described below, and the non-excitation actuated brake can be applied to various rotation drive systems other than a motor system.

FIG. 1(A) is a schematic block diagram of a non-excitation actuated brake according to the present embodiment, which is applied to a motor system, and FIG. 1(B) is a schematic half-sectional view of a brake mechanism part of the non-excitation actuated brake. Referring to FIG. 1(A), a motor system 100 includes a motor 110, an encoder 130 that detects rotation of a rotating shaft 120 of the motor 110, and a non-excitation actuated brake 1 for applying brake force to the rotating shaft 120. The non-excitation actuated brake 1 is provided with a brake mechanism part 10 attached to the rotating shaft 120 and a brake control circuit 20, and is supplied with power from a power source 30 such as a DC 24V power source.

As shown in FIG. 1(B), the brake mechanism part 10 has a basic configuration similar to a general non-excitation actuated brake and is disposed on an outer periphery of the rotating shaft 120. The brake mechanism part 10 includes a fixed plate 11, a friction brake plate 12, an attraction plate 13 (armature), a compression spring 15 incorporated into a yoke 14, and an electromagnet 16 constituted of a coil 16a also incorporated into the yoke 14. In addition to these components, the brake mechanism part 10 includes a permanent magnet 17 mounted on the yoke 14.

The fixed plate 11 is fixedly positioned a certain distance in the axial direction from a front end surface 14a of the yoke 14. The friction brake plate 12 is coaxially attached via an annular hub 18 to the rotating shaft 120, which is the object to which brake force is applied. The friction brake plate 12 rotates integrally with the rotating shaft 120 and can slide in the axial direction due to a spline connection with the hub 18. Annular friction plates are attached to both end surfaces of the friction brake plate 12. The attraction plate 13 is made of a magnetic material, and the attraction plate 13 faces the fixed plate 11 from the axial direction with the friction brake plate 12 located therebetween. The attraction plate 13 is supported to be slidable in the axial direction by a guide shaft 19 extending in the axial direction from the yoke front end surface 14a, and can slide between a brake force release position 13A in which contact is made with the yoke front end surface 14a and a brake force application position 13B in which the friction brake plate 12 is pressed against the attraction plate 13.

The compression spring 15 is made of a coil spring and is mounted to the yoke 14 so as to protrude in the axial direction from the yoke front end surface 14a. For example, a plurality of compression springs 15 are arranged at equal angular intervals in a circumferential direction, and spring force of the compression springs 15 can hold the attraction plate 13 in the brake force application position 13B, where the attraction plate 13 is pressed against the friction brake plate 12. In this state, a predetermined brake force is applied to the rotating shaft 120. In contrast, the permanent magnet 17 is, for example, an annular magnet, and is mounted on the yoke 14 so that an annular end surface of the magnet is exposed from the yoke front end surface 14a. The permanent magnet 17 can hold the attraction plate 13 in the brake force release position 13A by the magnetic attractive force of the magnet, against the spring force of the compression spring 15. It is also possible for the permanent magnet 17 to be attached to the attraction plate 13 side.

The electromagnet 16 is capable of generating an electromagnetic attractive force that pulls the attraction plate 13, which is urged to the braking force application position 13B, towards the braking force release position 13A against the spring force of the compression spring 15. By being excited in the opposite direction (in a direction that counteracts the magnetic attractive force of the permanent magnet 17), the electromagnet 16 can release the attraction plate 13, which is held through attraction by the holding magnetic force of the permanent magnet 17 at the braking force release position 13A.

Next, the brake control circuit 20 performs an attraction plate release operation, which excites the electromagnet 16 to move the attraction plate 13, which is held by attraction at the brake force release position 13A, to the brake force application position 13B, and an attraction plate attraction operation, which attracts the attraction plate 13 that has been urged to the brake force application position 13B, and moves the attraction plate 13 to the brake force release position 13A. Referring to FIG. 1(A), the brake control circuit 20 includes a power source voltage monitoring unit 21 (power source monitoring unit), a release power charging unit 22, a coil voltage control unit 24 for driving the electromagnet, and an attraction/release detection unit 23. The power source voltage monitoring unit 21 monitors the power source 30 and detects powering on and power source interruptions such as power outages. The release power charging unit 22 stores the power to excite the electromagnet 16. The attraction/release detection unit 23 confirms the attraction and release of the attraction plate 13 by detecting the magnetic poles formed in the electromagnet 16 on the basis of the current and voltage flowing through the coil 16a of the electromagnet 16. A magnetic pole sensor such as a Hall element may also be used to detect the magnetic poles.

When the coil voltage control unit 24 detects that a driving power source has been turned on, the coil voltage control unit 24 performs an operation of charging the release power charging unit 22 and, after the release power charging unit 22 is charged, excites the electromagnet 16 to generate an electromagnetic force (magnetic attraction force) that moves the attraction plate 13 from the braking force application position 13B to the braking force release position 13A. When the driving power source is detected to be shut off, the power supplied from the release power charging unit 22 is used to excite the electromagnet 16, releasing the attraction plate 13 from the attraction of the permanent magnet 17 and moving the attraction plate 13 from the braking force release position 13A to the braking force application position 13B. The electromagnetic attraction force of the electromagnet 16 can also be used in conjunction with the magnetic attraction force of the permanent magnet 17 to hold the attraction plate 13 at the braking force release position 13A. In such instances, by exciting the electromagnet 16 using less power than when the power source is turned on or off, heat generation and power consumption due to continuous energizing of the coil can be minimized.

### (When the power source is on: attraction plate attraction operation)

The operation of the non-excitation actuated brake 1 when the power source is on shall be described with reference to FIG. 2. FIG. 2(A) is a schematic flowchart of the operation of the non-excitation actuated brake when the power source is on, and FIG. 2(B) is an explanatory diagram of the state of the brake mechanism part 10 of the non-excitation actuated brake 1 during a transition to the brake force release state (completion of attraction plate attraction). When the power source is turned on, the turning on of the power source is detected by the power source voltage monitoring unit 21 (step ST1 of FIG. 2(A)) and an operation of charging the release power charging unit 22 is performed (step ST2 of FIG. 2(A)). The brake mechanism part 10 of the non-excitation actuated brake 1 is in state B1 (initial state) of FIG. 2(B).

Next, to move the attraction plate 13 to the brake force release position 13A, an operation of initially attracting the attraction plate 13 is performed (step ST3 of FIG. 2(A)). The coil voltage control unit 24 momentarily supplies current (24V) to the coil 16a of the electromagnet 16, temporarily generating a magnetic attractive force that attracts the attraction plate 13. Due to the combined magnetic attractive forces of the permanent magnet 17 and the electromagnet 16, the attraction plate 13 slides against the spring force of the compression spring 15 and is held in the brake force release position 13A, pressed against the yoke front end surface 14a (state B2 in FIG. 2(B)).

Next, excitation of the electromagnet 16 is stopped (step ST4). The attraction/release detection unit 23 confirms the excitation state of the electromagnet 16, and the initial attraction operation ends (step ST5 in FIG. 2(A), state B3 in FIG. 2(B)). The brake force release state is thereafter maintained by the magnetic attraction force of the permanent magnet 17. In this state, the motor system 100 is driven and the rotating shaft 120 rotates.

In step ST4, the voltage used to energize the electromagnet 16 can be switched to a low voltage, thereby switching to a power-saving state where the attraction plate 13 is attracted by the electromagnet 16. In such instances, as shown in state B4 of FIG. 2(B), the coil 16a of the electromagnet 16 is continuously energized at low voltage. In such instances, the brake force release state is maintained by the combined magnetic attraction forces of the permanent magnet 17 and the electromagnet 16.

### (When the power source off: attraction plate release operation)

FIG. 3(A) is a schematic flowchart of the operation of switching the non-excitation actuated brake 1 from the brake force release state to the brake force application state when the power source for driving is shut off, and FIG. 3(B) is an explanatory diagram of the state of the brake mechanism part 10 during a transition to the brake force applied state (attraction plate released state). First, the brake mechanism part 10 of the non-excitation actuated brake 1 assumes state B3 or state B4 of FIG. 3(B). The power source is detected to have been shut off by the power source voltage monitoring unit 21 (step ST11 of FIG. 3(A)). When the attraction plate 13 is attracted to the brake force release position 13A by the electromagnet 16 in addition to the permanent magnet 17 (state B4 of FIG. 3(B)), the coil of the electromagnet 16 also stops being energized (step ST12 of FIG. 3(A)).

When the power source is detected to have been shut off, the coil voltage control unit 24 excites the electromagnet 16 using the power supplied from the release power charging unit 22, and the attraction plate 13, which is held by attraction at the brake force release position 13A by the holding magnetic force of the permanent magnet 17, is released from the attraction of the permanent magnet 17 (step ST13 of FIG. 3(A)). In such instances, the direction in which the coil 16a of the electromagnet 16 is energized is controlled to generate magnetic field lines in a direction that cancels out the magnetic force of the permanent magnet 17. Using this magnetic force cancelation as a trigger, a magnitude relationship of the forces acting on the attraction plate 13 (urging force of attraction plate by compression spring 15 < attraction force of permanent magnet 17 on attraction plate) is reversed. Due to the spring force of the compression spring 15, the attraction plate 13 is released from the attraction of the permanent magnet 17 and slides from the brake force release position 13A towards the friction brake plate 12, so as to assume the brake force application position 13B of being pressed against the friction brake plate 12 (state B5 in FIG. 3(B)).

The attraction/release detection unit 23 confirms the excitation state of the electromagnet 16, and the operation of releasing the attraction plate 13 concludes (step ST14 in FIG. 3(A), state B1 in FIG. 3(B)). The brake force application state is thereafter maintained by the spring force of the compression spring 15. In this state, the brake force acts on the friction brake plate 12, and the stopped state of the rotating shaft 120 is maintained.

## Claims

1. A non-excitation actuated brake **characterized by** comprising:
a friction brake plate that is attached to a rotating shaft, to which a brake force is to be applied, and that rotates integrally with the rotating shaft;
an attraction plate that is made of a magnetic material and that can be moved to a brake force application position of being pressed against the friction brake plate and a brake force release position of being separated from the friction brake plate;
a compression spring that generates a holding spring force for holding the attraction plate at the brake force application position;
a permanent magnet that generates a holding magnetic force for holding the attraction plate at the brake force release position;
an electromagnet capable of generating an electromagnetic force for moving the attraction plate; and
a brake control circuit that drivably controls the electromagnet so that when a power source is shut off, the attraction plate, which has been held at the brake force release position, moves toward the brake force application position, and when the power source is turned on, the attraction plate, which has been held at the brake force application position, moves toward the brake force release position.

2. The non-excitation actuated brake of claim 1, wherein
the brake control circuit is provided with:
a power source monitoring unit that monitors the power source;
a charging unit that stores power for exciting the electromagnet;
a coil voltage control unit that, when the power source monitoring unit detects that the power source is shut off, uses the power supplied from the charging unit to momentarily energize a coil of the electromagnet in a direction that cancels out the holding magnetic force of the permanent magnet, in order to move the attraction plate from the brake force release position to the brake force application position; and
an attraction/release detection unit that detects an operation of attracting the attraction plate and an operation of releasing the attraction plate.

3. The non-excitation actuated brake of claim 2, wherein
when the power source monitoring unit detects that the power source is turned on, the coil voltage control unit performs an operation of charging the charging unit and, in order to move the attraction plate from the brake force application position to the brake force release position, momentarily energizes the coil of the electromagnet to generate electromagnetic force for attracting the attraction plate.

4. The non-excitation actuated brake of claim 3, wherein
when the attraction plate is held in the brake force release position, the coil voltage control unit continuously energizes the coil of the electromagnet at a lower voltage than during the momentary energizing to generate a holding electromagnetic force for holding the attraction plate at the brake force release position.

## Amended claims

### Amended claims under Art. 19.1 PCT

2. A non-excitation actuated brake **characterized by** comprising:
a friction brake plate that is attached to a rotating shaft, to which a brake force is to be applied, and that rotates integrally with the rotating shaft;
an attraction plate that is made of a magnetic material and that can be moved to a brake force application position of being pressed against the friction brake plate and a brake force release position of being separated from the friction brake plate;
a compression spring that generates a holding spring force for holding the attraction plate at the brake force application position;
a permanent magnet that generates a holding magnetic force for holding the attraction plate at the brake force release position;
an electromagnet capable of generating an electromagnetic force for moving the attraction plate; and
a brake control circuit that drivably controls the electromagnet so that when a power source is shut off, the attraction plate, which has been held at the brake force release position, moves toward the brake force application position, and when the power source is turned on, the attraction plate, which has been held at the brake force application position, moves toward the brake force release position,
wherein
the brake control circuit is provided with:
a power source monitoring unit that monitors the power source;
a charging unit that stores power for exciting the electromagnet;
a coil voltage control unit that, when the power source monitoring unit detects that the power source is shut off, uses the power supplied from the charging unit to momentarily energize a coil of the electromagnet in a direction that cancels out the holding magnetic force of the permanent magnet, in order to move the attraction plate from the brake force release position to the brake force application position; and
an attraction/release detection unit that detects an operation of attracting the attraction plate and an operation of releasing the attraction plate.

3. The non-excitation actuated brake of claim 2, wherein
when the power source monitoring unit detects that the power source is turned on, the coil voltage control unit performs an operation of charging the charging unit and, in order to move the attraction plate from the brake force application position to the brake force release position, momentarily energizes the coil of the electromagnet to generate electromagnetic force for attracting the attraction plate.

4. The non-excitation actuated brake of claim 3, wherein
when the attraction plate is held in the brake force release position, the coil voltage control unit continuously energizes the coil of the electromagnet at a lower voltage than during the momentary energizing to generate a holding electromagnetic force for holding the attraction plate at the brake force release position.
